# EUROPÄISCHE PATENTANMELDUNG

(11) **EP 4 108 610 A1**
(43) Veröffentlichungstag der Anmeldung: **28.12.2022**
(21) Anmeldenummer: 21305874.6
(22) Anmeldetag: 24.06.2021
(51) Int. Cl.: B65G 54/02, B60L 13/03, H02K 41/02

(54) **LINEARMOTORSYSTEM UND VERFAHREN ZUM BETREIBEN EINES SOLCHEN**

(71) Anmelder: Schneider Electric Industries SAS, 92500 Rueil-Malmaison (FR)
(72) Erfinder: VOLK, Reiner, 97264 Helmstadt (DE)
(74) Vertreter: Manitz Finsterwald Patent- und Rechtsanwaltspartnerschaft mbB

(57) **Zusammenfassung**

Ein Linearmotorsystem, bei dem es sich insbesondere um ein Transportsystem und beispielsweise um ein Multi-Carrier-System handelt, umfasst eine Führungsbahn mit einer Vielzahl von entlang der Führungsbahn verteilt angeordneten Elektromagneten und mindestens einen Läufer, der von der Führungsbahn geführt und entlang dieser bewegbar ist und der einen Antriebsmagneten zum Zusammenwirken mit den Elektromagneten zum Bewegen des Läufers aufweist. Weiterhin weist das Linearmotosystem mindestens ein Kopplungselement und mindestens ein Sicherungsmittel, welches sich entlang der Führungsbahn erstreckt und durch das Kopplungselement gehalten wird, auf. Das Kopplungselement koppelt das Sicherungsmittel mit dem Läufer.

## Beschreibung

Die Erfindung betrifft ein Linearmotorsystem und ein Verfahren zum Betreiben eines solchen. Das Linearmotorsystem weist zumindest einen Läufer und eine Führungsbahn mit einer Vielzahl von entlang der Führungsbahn verteilt angeordneten Elektromagneten auf, die mit einem Antriebsmagneten des Läufers zusammenwirken, um den Läufer entlang der Führungsbahn zu bewegen.

Linearmotorsysteme sind heute weit verbreitet. Sie können zum Beispiel dazu eingesetzt werden, Produkte in Industrieanlagen zu bewegen, insbesondere zu transportieren. Zum flexiblen Transport von verschiedensten Produkten sind Multi-Carrier-Systeme besonders vorteilhaft. Diese umfassen eine Vielzahl an Läufern, d.h. Transporteinheiten, die einzeln und unabhängig voneinander bewegbar sind. In einem typischen Multi-Carrier-System ist eine Führungsbahn für die Läufer in sich geschlossen, was einen Umlaufbetrieb ermöglicht.

Auf einen Läufer wirken während der Bewegung entlang der Führungsbahn unterschiedliche Kräfte und Momente, beispielsweise Kräfte aufgrund einer Beschleunigung oder Verlangsamung des Läufers und Zentrifugalkräfte bei einer Kurvenfahrt. Für die Höhe der Momente ist insbesondere die Lage des Schwerpunkts der Läufer verantwortlich. Es besteht die Gefahr, dass diese durch die Bewegung des Läufers auftretenden Kräfte diejenigen Kräfte, die den Läufer an der Führungsbahn halten, übertreffen und der Läufer infolge dessen, möglicherweise mit einer hohen Geschwindigkeit, sich von der Führungsbahn löst und die durch die Führungsbahn beschriebene Bewegungsbahn verlässt. Durch dieses Abfliegen eines Läufers von der Führungsbahn können sowohl Sachschäden entstehen als auch umstehende Personen verletzt werden. Typischerweise wird der Läufer durch Magnetkräfte an der Führungsbahn gehalten. Während des normalen Betriebs sollten die Magnetkräfte den Läufer stets an der Führungsbahn halten und ein Verlassen des Läufers von der durch die Führungsbahn beschriebenen Bewegungsbahn verhindern. Infolge von Fehleinstellungen, die insbesondere während der Inbetriebnahme eines Linearmotorsystems auftreten können, kann es dazu kommen, dass die Magnetkräfte, die die Läufer an der Führungsbahn halten, zeitweise zu gering sind, sodass ein oder sogar mehrere Läufer während ihrer Bewegung nicht mehr an der Führungsbahn gehalten werden können. Sich lösende Läufer können dann eine ernste Gefahr für umstehende Personen oder benachbarte Maschinen darstellen.

Eine Aufgabe der Erfindung besteht darin, ein Linearmotorsystem und ein Verfahren zum Betreiben eines solchen anzugeben, welche die Sicherheit beim Betrieb des Linearmotorsystems erhöhen.

Diese Aufgabe wird durch die Gegenstände der unabhängigen Ansprüche gelöst.

Ein Linearmotorsystem, das insbesondere als Transportsystem und beispielsweise als Multi-Carrier-System ausgebildet ist, umfasst eine Führungsbahn, welche eine Vielzahl von entlang der Führungsbahn verteilt angeordneten Elektromagneten aufweist und mindestens einen Läufer, welcher von der Führungsbahn geführt und entlang dieser bewegbar ist und welcher einen Antriebsmagneten zum Zusammenwirken mit den Elektromagneten zum Bewegen des Läufers aufweist. Ferner umfasst das Linearmotorsystem mindestens ein Kopplungselement und mindestens ein Sicherungsmittel, welches sich entlang der Führungsbahn erstreckt und durch das Kopplungselement gehalten wird, wobei das Kopplungselement das Sicherungsmittel mit dem Läufer koppelt.

Bevorzugt sind mehrere Läufer vorgesehen, welche jeweils über Kopplungselemente mit dem Sicherungsmittel verbunden sind. Die Läufer können so über das Sicherungsmittel untereinander verbunden sein.

Erfindungsgemäß kann auf einfache Art und Weise die Sicherheit des Linearmotorsystems, insbesondere während dessen Inbetriebnahme, erhöht werden, da Läufer, welche die Führungsbahn verlassen, von dem Sicherungsmittel gebremst oder gestoppt werden können. Verletzungen von Personen oder Beschädigungen von benachbarten Gegenständen können so wirksam verhindert werden.

Durch den Umstand, dass das Sicherungsmittel (über die Kopplungselemente) von den Läufern gehalten ist, müssen die Elektromagneten bzw. die Linearmotoren und/oder die Führungsbahn nicht mechanisch verändert werden. Ein Nachrüsten des Sicherungsmittels ist so jederzeit möglich.

Bevorzugt kann das Sicherungsmittel ausschließlich durch die Läufer gehalten werden. Eine dedizierte Befestigung des Sicherungsmittels an den Linearmotoren und/oder an der Führungsbahn ist bevorzugt nicht vorgesehen.

Der Erfindung liegt die Erkenntnis zugrunde, dass ein Sicherungsmittel, welches, insbesondere ausschließlich, mit den Läufern eines Linearmotorsystems gekoppelt ist, die Läufer insofern sichert, dass eine Bewegung der Läufer, die die Läufer von der durch die Führungsbahn vorgegebenen Bewegungsbahn entfernt, bremst und/oder stoppt. Eine zusätzliche Kopplung des Sicherungsmittels mit der Führungsbahn ist bevorzugt nicht erforderlich.

Die Funktion des Kopplungselements liegt darin, das Sicherungsmittel zu halten und mit den Läufern zu koppeln. Die Kopplung zwischen den Läufern und dem Sicherungsmittel ist so zu verstehen, dass das Kopplungselement eine Kraftübertragung zwischen den Läufern und dem Sicherungsmittel bewirkt, insbesondere bei Kräften, die quer zur Führungsbahn wirken. Für den Fall, dass das Linearmotorsystem mehrere Läufer umfasst, die mit dem Sicherungsmittel gekoppelt sind, werden die Kräfte, die auf einen Läufer beim Abfliegen von der Führungsbahn wirken, über die Kopplungselemente und das Sicherungsmittel teilweise auf die übrigen Läufer und/oder die Führungsbahn übertragen, wodurch die Bewegung des Läufers quer zur Führungsbahn gebremst und/oder gestoppt wird. Die Kraft beim Abfliegen wird so auf mehrere Läufer verteilt. Punktuelle Belastungen der Führungsbahn können auf diese Weise vermieden werden.

Das Sicherungsmittel ist bevorzugt mit allen Läufern des Linearmotorsystems über die Kopplungselemente gekoppelt. Damit eine individuelle Bewegung und ebenfalls eine Sicherung eines jeden Läufers entlang der gesamten Führungsbahn möglich sind, erstreckt sich das Sicherungsmittel entlang der gesamten Führungsbahn. Die Läufer können mit mehreren Sicherungsmitteln gekoppelt werden, um die Kraftübertragung zwischen den Läufern beim Abfliegen eines Läufers zu erhöhen. Durch die Verwendung mehrerer Sicherungsmittel können auf die Sicherungsmittel höhere Kräfte beim Abfliegen eines Läufers übertragen werden, ohne dass die Sicherungsmittel reißen oder beschädigt werden. Zudem erlaubt die Verwendung mehrerer Sicherungsmittel, dass einzelne Sicherungsmittel über die Kopplungselemente an unterschiedlichen Positionen des Läufers mit diesem gekoppelt werden. Hierdurch kann die Kraft, die beim Abfliegen eines Läufers auf die übrigen Läufer übertragen wird, so verteilt werden, dass die Bewegung des Läufers quer zur Führungsbahn effektiver gebremst und/oder gestoppt wird und die übrigen Läufer sowie die Führungsbahn weniger beansprucht werden. Die Sicherungsmittel werden bevorzugt ausschließlich vom Kopplungselement gehalten.

Der Antriebsmagnet kann auch mehrere einzelne Magneten, insbesondere Permanentmagneten, umfassen.

Die Führungsbahn kann durch mehrere Linearmotoren (d. h. Segmente) gebildet sein. Bevorzugt umfasst jeder Linearmotor mehrere der Elektromagneten, mittels welchen die Läufer bewegt werden.

Bevorzugt können die Läufer an einer umlaufenden Außenwand der Linearmotoren mit Rollen geführt sein und im Betrieb an der Außenwand entlangfahren. Das Sicherungsmittel ist bevorzugt benachbart zu und/oder bereichsweise und/oder zeitweise anliegend an die umlaufende Außenwand ausgebildet. Das Sicherungsmittel kann demensprechend eine Länge aufweisen, die größer ist als die Länge der Führungsbahn und/oder die Länge der umlaufenden Außenwand. Die umlaufende Außenwand kann Teil der Führungsbahn sein.

Vorteilhafte Weiterbildungen der Erfindung sind in den Unteransprüchen, der Beschreibung und den Zeichnungen angegeben.

Gemäß einer Ausführungsform ist das Sicherungsmittel ausgebildet, bei einem Lösen des Läufers von der Führungsbahn, die Bewegung des Läufers in einer Richtung weg von der Führungsbahn und/oder quer zur Führungsbahn zu bremsen und/oder zu stoppen. Beim Abfliegen eines Läufers von der Führungsbahn, d. h. beispielsweise bei einer Bewegung eines Läufers quer zur Führungsbahn, welche dazu führt, dass sich der Läufer von der Führungsbahn löst und die durch die Führungsbahn beschriebene Bewegungsbahn verlässt, sodass eine weitere Bewegung des Läufers aus dem Zusammenwirken zwischen Elektromagneten und Antriebsmagneten nicht mehr gegeben ist, treten in Abhängigkeit von der Geschwindigkeit des Läufers, der Masse des Läufers samt Transportladung und der vollzogenen Bewegungsbahn Kräfte auf, denen das Sicherungsmittel standhält und entgegenwirkt. Die Bewegung des Läufers in einer Richtung quer zur Führungsbahn und/oder weg von der Führungsbahn (z.B. ein Herunterfalles des Läufers) wird somit effektiv gebremst und/oder gestoppt.

Das Sicherungsmittel kann ferner ein in sich geschlossenes, ringförmiges Band oder ein in sich geschlossener, ringförmiger Draht sein. Vorzugsweise umfasst das Sicherungsmittel Metall und/oder ein synthetisches Material. Material und Materialstärke sind so gewählt, dass das Sicherungsmittel die beim Abfliegen eines Läufers von der Führungsbahn auftretenden Kräfte, die auf das Sicherungsmittel wirken, standhält. Das Sicherungsmittel kann außerdem einen Verschluss zum Öffnen des ringförmigen Bandes oder Drahtes umfassen. Allgemein kann das Sicherungsmittel werkzeuglos lösbar sein, indem z.B. der Verschluss werkzeuglos zu öffnen ist. In einer vorteilhaften Ausführungsform ist das Sicherungsmittel während des normalen Betriebs des Linearmotorsystems ungespannt, insbesondere wirken keine oder nur geringe Kräfte quer zur Führungsbahn auf das Sicherungsmittel. Erst bei einem Abfliegen eines Läufers von der Führungsbahn wird das Sicherungsmittel durch die quer zur Führungsbahn auf das Sicherungsmittel wirkenden Kräfte gespannt, wodurch die Bewegung des Läufers gebremst und/oder gestoppt wird.

Gemäß einer Ausführungsform umfasst das Linearmotorsystem mehrere Läufer und mehrere Kopplungselemente und das Sicherungsmittel wird ausschließlich durch die Kopplungselemente gehalten. Jeder Läufer ist mit mindestens einem Kopplungselement mit dem mindestens einen Sicherungsmittel gekoppelt. Das Sicherungsmittel wird bevorzugt ausschließlich von den Kopplungselementen, die mit den Läufern verbunden sind, gehalten und weist keine weitere Kopplung zur Führungsbahn oder anderen Bauteilen des Linearmotorsystems auf. Trotzdem ist es natürlich möglich, dass das Sicherungsmittel die Führungsbahn berührt oder bei Abfliegen eines Läufers Kraft auf die Führungsbahn ausübt. Die Ausführung ohne eine fest vorgesehene Kopplung mit der Führungsbahn ermöglicht eine besonders einfache und kostengünstige Sicherung der Läufer und verringert zudem die Abnutzung des Sicherungsmittels, welche durch zusätzliche Reibung zwischen dem Sicherungsmittel und weiteren Kopplungselementen entstünde.

Gemäß einer weiteren Ausführungsform ist das Kopplungselement lösbar mit dem Läufer verbunden. Hierdurch kann die erfindungsgemäße Sicherung der Läufer mit geringem Aufwand auch an bereits bestehende Linearmotorsysteme nachgerüstet werden. Bei dem Kopplungselement handelt es sich beispielsweise um Haken oder Ringhaken, die zur Verbindung mit dem Läufer ein Gewinde aufweisen und in die das Sicherungsmittel eingehängt werden kann.

Ferner ist das Kopplungselement zwischen der Führungsbahn und dem Läufer angeordnet. Hierdurch kann quer zur Führungsbahn auftretenden Kräften effektiv entgegengewirkt werden, insbesondere bei einem Abfliegen eines seitlich geführten Läufers in der horizontalen Bewegung. Zudem werden durch diese Anordnung des Kopplungselements der Führungsbahn abgewandte Flächen des Läufers für weitere Funktionalitäten wie z. B. den Transport von Gegenständen freigehalten.

Alternativ oder zusätzlich umfasst das Kopplungselement mindestens eine Durchführung durch den Läufer. Die Durchführung durch den Läufer verläuft vorzugsweise entlang der Richtung, in die sich die Führungsbahn erstreckt, damit die an das Sicherungsmittel gekoppelten Läufer sich entlang der Führungsbahn bewegen können und das Sicherungsmittel durch die Bewegung der Läufer möglichst wenig beansprucht wird. Die Durchführung kann als eine geschlossene Durchführung innerhalb des Läufers ausgebildet sein oder als eine Durchführung durch den Läufer, die an einer Seite offen ist, wodurch ein einfaches Einlegen des Sicherungsmittels in die Durchführung möglich ist. Bei der geschlossenen Durchführung kann diese derart ausgebildet sein, dass das Sicherungsmittel durch die Durchführung hindurchgeführt werden kann oder diese sich öffnen lässt damit das Sicherungsmittel eingelegt werden kann, um ein einfaches Koppeln und Entkoppeln von Läufer und Sicherungsmittel zu erreichen.

Gemäß einer Ausführungsform ist das Sicherungsmittel lösbar durch das Kopplungselement geführt. Das hierdurch erreichte einfache Koppeln und Entkoppeln von Läufer und Sicherungsmittel ermöglicht ein schnelles Entfernen und Hinzufügen von Läufern aus bzw. in ein erfindungsgemäßes Linearmotorsystem. Ferner wird dadurch ein unproblematischer Austausch von Sicherungsmitteln ermöglicht.

Gemäß einer weiteren Ausführungsform bewegt sich der Läufer entlang des Sicherungsmittels. Ferner wird das Sicherungsmittel von dem Kopplungselement derart gehalten, dass sich das Sicherungsmittel entlang der Führungsbahn bewegt. Inwiefern sich das Sicherungsmittel, bedingt durch die Bewegung eines Läufers, entlang der Führungsbahn bewegt, wird insbesondere von der Art und Weise bestimmt wie das Sicherungsmittel durch das Kopplungselement gehalten wird. Um eine unabhängige und individuelle Bewegung mehrerer mit dem Sicherungsmittel gekoppelter Läufer entlang der Führungsbahn zu ermöglichen, wird das Sicherungsmittel vom Kopplungsmittel derart gehalten, dass sich der Läufer entlang des Sicherungsmittels bewegen kann. Durch Reibung zwischen dem Sicherungsmittel und dem Kopplungselement kann eine, insbesondere geringfügige, d.h. eine Bewegung die im Durchschnitt langsamer ist als die durchschnittliche Geschwindigkeit der Läufer, Bewegung des Sicherungsmittels entlang der Führungsbahn entstehen. Die Bewegung des Sicherungsmittels kann eine gleichmäßige Abnutzung des Sicherungsmittels als positiven Effekt zur Folge haben.

Gemäß einer Ausführungsform umfasst das Linearmotorsystem ein Detektionsmittel zur Detektion des Abstandes des Läufers von der Führungsbahn. Das Detektionsmittel kann beispielsweise ein Positionserfassungssystem des Linearmotorsystems umfassen. Das Positionserfassungssystem kann insbesondere Magnet- bzw. Hallsensoren aufweisen, welche entlang der Führungsbahn angeordnet sind und Encodermagneten der Läufer erfassen, insbesondere mehrdimensional. Insbesondere nach der Inbetriebnahme eines Linearmotorsystems oder nach Veränderungen an dem Linearmotorsystem können die durch das Detektionsmittel erfolgten Messungen des Abstands zwischen Läufer und Führungsbahn dazu geeignet sein, um festzustellen, ob der fehlerfreie Regelbetrieb des Linearmotorsystem erzielt wird.

Weiterer Gegenstand der Erfindung ist ein Verfahren zum Betreiben eines Linearmotorsystems, wie es beispielsweise vorstehend beschrieben ist. Das Linearmotorsystem umfasst eine Führungsbahn, die eine Vielzahl von entlang der Führungsbahn verteilt angeordneten Elektromagneten aufweist, mindestens einen Läufer, der von der Führungsbahn geführt und entlang dieser bewegbar ist und der einen Antriebsmagneten zum Zusammenwirken mit den Elektromagneten zum Bewegen des Läufers aufweist, mindestens ein Kopplungselement und mindestens ein Sicherungsmittel, wobei das Kopplungselement das Sicherungsmittel mit dem Läufer koppelt. Das Verfahren umfasst ferner das Hindurchführen des Sicherungsmittels durch das Kopplungselement und das Bewegen des Läufers entlang der Führungsbahn.

Indem ein Sicherungsmittel mit den Läufern des Linearmotorsystems über Kopplungselemente gekoppelt ist, ermöglicht das erfindungsgemäße Verfahren den Betrieb eines Linearmotorsystems bei dem eine Bewegung eines Läufers quer zur Führungsbahn oder allgemein weg von der Führungsbahn gebremst und/oder gestoppt wird. Zudem ermöglicht das Verfahren, bestehende Linearmotorsysteme, die bereits ein Kopplungselement aufweisen, um ein Sicherungsmittel zu ergänzen, um so das erfindungsgemäße Verfahren durchführen zu können.

Gemäß einer Ausführungsform des Verfahrens ist das Kopplungselement lösbar mit dem mindestens einen Läufer verbindbar und das Verfahren umfasst ferner das Verbinden des Kopplungselements mit dem Läufer. Somit lassen sich bereits bestehende Linearmotorsysteme, die kein Kopplungselement aufweisen, um ein Kopplungselement ergänzen, um so das erfindungsgemäße Verfahren durchführen zu können.

Gemäß einer weiteren Ausführungsform des Verfahrens umfasst das Linearmotorsystem ein Detektionsmittel zur Detektion des Abstandes des Läufers von der Führungsbahn. Das Verfahren umfasst ferner das Lösen des Sicherungsmittels von den Läufern und/oder das Lösen der Hindurchführung des Sicherungsmittels durch das Kopplungselement, wenn das Detektionsmittel zwischen dem Läufer und der Führungsbahn einen Abstand detektiert, welcher, bevorzugt dauerhaft, kleiner als ein Schwellenwert ist. Ein Abstand unterhalb des Schwellenwerts weist darauf hin, dass der Läufer immer ausreichend stark zu der Führungsbahn und/oder dem Elektromagneten hingezogen wird und dementsprechend keine Gefahr eines Abfliegens besteht. Vorzugsweise wird das Sicherungsmittel gelöst, wenn der Läufer bei einer üblichen Bewegung entlang der Führungsbahn zeitweise oder dauerhaft einen Abstand aufweist, der kleiner als der Schwellenwert ist. Dies kann insbesondere nach einer Inbetriebnahmephase des Linearmotorsystems erfolgen, wenn erkannt wird, dass das Linearmotorsystem korrekt und zuverlässig funktioniert. Hierdurch wird sichergestellt, dass das Sicherungsmittel erst dann aus der Kopplung mit den Läufern entfernt wird, wenn von einem fehlerfreien und ordnungsgemäßen Betrieb des Linearmotorsystems ausgegangen werden kann.

Alternativ oder zusätzlich kann das Sicherungsmittel gelöst werden, wenn die Läufer testhalber mit reduzierter Masse, d.h. mit reduzierter Transportlast, bewegt werden. Durch die reduzierte Masse können die auftretenden Kräfte und/oder Momente reduziert werden. Die Bewegung mit reduzierter Masse kann insbesondere in einer Inbetriebnahmephase erfolgen.

Falls erkannt wird, beispielsweise mittels des Detektionsmittels, dass sich ein Läufer vom Track gelöst hat, so kann das Linearmotorsystem ein Warnsignal ausgeben und/oder die Bewegungen sämtlicher Läufer umgehend stoppen. Nachfolgend wird die Erfindung beispielhaft unter Bezugnahme auf die Figuren beschrieben. Es zeigen:
- Fig. 1: ein als Transportsystem ausgebildetes Linearmotorsystem,
- Fig. 2: eine Schnittansicht eines Abschnitts eines Linearmotorsystems gemäß einer ersten Ausführungsform mit einer Schnittebene senkrecht zur Führungsbahn,
- Fig. 3: eine Schnittansicht eines Abschnitts eines Linearmotorsystems gemäß einer zweiten Ausführungsform mit einer Schnittebene senkrecht zur Führungsbahn,
- Fig. 4: eine Schnittansicht eines Abschnitts eines Linearmotorsystems gemäß einer dritten Ausführungsform mit einer Schnittebene senkrecht zur Führungsbahn und
- Fig. 5: eine Schnittansicht eines Abschnitts eines Linearmotorsystems gemäß einer vierten Ausführungsform mit einer Schnittebene senkrecht zur Führungsbahn.

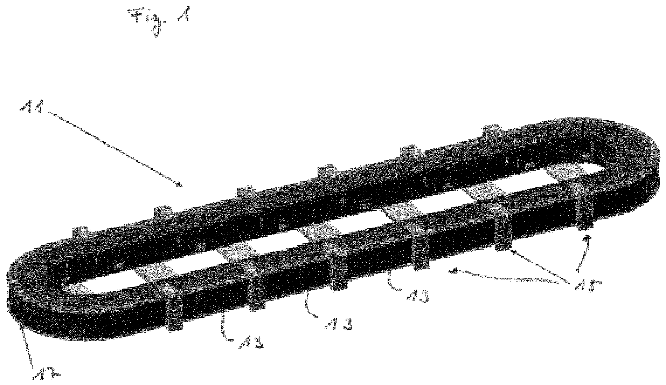

Fig. 1 stellt ein Linearmotorsystem 11 dar, das als Multi-Carrier-System ausgebildet ist. Das Linearmotorsystem 11 umfasst mehrere, Segmenten zugeordnete, Linearmotoren 13, die aneinandergereiht angeordnet sind, so dass eine durchgehende und in diesem Fall umlaufende Bewegung der Läufer 15 entlang einer Führungsbahn 17 ermöglicht ist. Die Führungsbahn 17 erstreckt sich umlaufend um das Linearmotorsystem 11. Ferner umfasst das Transportsystem 11 mehrere Läufer 15, die einzelne Transportelemente des Transportsystems 11 bilden und die mittels der Linearmotoren 13 entlang der Führungsbahn 17 unabhängig voneinander bewegt werden können. Die Läufer 15 werden mittels (nicht gezeigter) Rollen an einer umlaufenden Außenwand des Linearmotorsystems geführt.

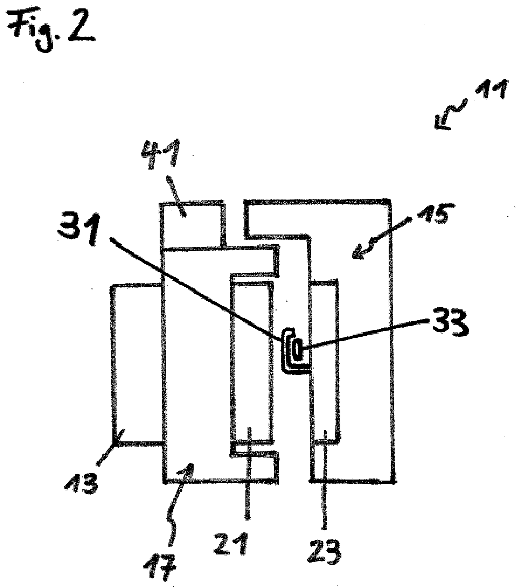

In Fig. 2 ist ein Segment des Linearmotorsystems 11 mit einem Läufer 15 in einer ersten Ausführungsform in einer Schnittansicht dargestellt. Der Läufer 15 kann durch das Zusammenwirken von Elektromagneten 21, die an und entlang der Führungsbahn 17 angeordnet sind, und eines Antriebsmagneten 23 entlang der Führungsbahn 17 bewegt werden. Die Bewegungsrichtung des Läufers 15 verläuft senkrecht zur Schnittebene der Darstellung in Fig. 2, d.h. entlang einer Normalen auf die Schnittebene.

Ein Sicherungsmittel 33, welches ein Band aus synthetischem Material ist, erstreckt sich entlang der gesamten Führungsbahn 17 und ist geschlossen ausgebildet. Das Sicherungsmittel 33 kann ausschließlich aus synthetischem Material oder aus Metall bestehen oder synthetisches Material und/oder Metall umfassen. Das Sicherungsmittel 33 kann als Band oder als Draht ausgebildet sein. Die Querschnittsform des Sicherungsmittels 33 kann kreisförmig oder viereckig sein oder eine beliebige andere Form aufweisen. Weiterhin kann das Sicherungsmittel 33 sowohl eine ausgeprägte Elastizität aufweisen als auch weitestgehend starr sein. Das Sicherungsmittel 33 ist in jedem Fall dahingehend ausgelegt, dass es den Kräften, die bei einem Abfliegen eines Läufers 15 von der Führungsbahn 17 während des Betriebs des Linearmotorsystems 11 auftreten und auf das Sicherungsmittel 33 wirken können, standhält und eine weitergehende Bewegung des Läufers 15 quer zur Führungsbahn 17 und/oder weg von der Führungsbahn 17 bremst und/oder stoppt.

Damit das Sicherungsmittel 33 eine durch das Abfliegen eines Läufers 15 von der Führungsbahn 17 entstehende Bewegung des Läufers 15 quer zur Führungsbahn 17 bremsen oder stoppen kann, ist das Sicherungsmittel 33 mittels eines Kopplungselements 31 mit dem Läufer 15 gekoppelt. In der in Fig. 2 gezeigten ersten Ausführungsform des Linearmotorsystems 11 ist das Kopplungselement 31 ein Haken, welcher mit dem Läufer 15 verbunden ist und in den das Sicherungsmittel 33 lösbar eingehakt ist. Die Form des Hakens kann in vielfältige Weise ausgebildet sein, beispielsweise kann das Kopplungselement 31 auch als geschlossener Ringhaken ausgebildet sein, durch den das Sicherungsmittel 33 hindurchgeführt wird. Das Kopplungselement 31 ist mittels eines Gewindes lösbar mit dem Läufer 15 verbunden. Das Kopplungselement 31 kann auch in andere Weise mit dem Läufer 15 verbunden werden, solange die Verbindung zwischen Kopplungselement 31 und Läufer 15 den auftretenden Kräften, die beim Abfliegen des Läufers 15 von der Führungsbahn 17 und der darauffolgenden Bewegung des Läufers 15 quer zur Führungsbahn 17 und/oder weg von der Führungsbahn 17 auftreten können, standhält.

Jeder Läufer 15 des Linearmotorsystems 11 weist ein Kopplungselement 31 auf, welches das Sicherungsmittel 33 mit dem jeweiligen Läufer 15 koppelt. Die Läufer 15 können auch jeweils mehr als ein Kopplungselement 31 aufweisen. Die Kopplungselemente 31 halten zudem das Sicherungsmittel 33 und verhindern somit ein Herunterfallen des Sicherungsmittels 33. Das Sicherungsmittel 33 wird ausschließlich durch die Kopplungselemente 31, die das Sicherungsmittel 33 mit den Läufern 15 koppeln, gehalten. Das Sicherungsmittel 31 ist nicht mit der Führungsbahn 17 oder anderen Elementen des Linearmotorsystems 11 gekoppelt.

Bei der Bewegung eines einzelnen Läufers 15 entlang der Führungsbahn 17 oder bei einer Mehrzahl von Läufern 15, die sich entlang der Führungsbahn 17 in eine gleiche Richtung bewegen, bewegt sich das Sicherungsmittel 33 aufgrund der Reibung zwischen dem Sicherungsmittel 33 und den Kopplungselementen 31 typischerweise mit langsamerer Geschwindigkeit als der bzw. die Mehrzahl an Läufern 15. Das Sicherungsmittel 33 bewegt sich hierbei entlang der Führungsbahn 17 in die gleiche Richtung wie der bzw. die Mehrzahl an Läufern 15. Bewegen sich Läufer 15 des Linearmotorsystems 11 hingegen kurzzeitig in unterschiedliche Richtungen entlang der Führungsbahn 17, so bewegt sich das Sicherungsmittel 33 entweder in die eine oder die andere Richtung entlang der Führungsbahn17 oder steht still.

Das Detektionsmittel 41 misst den Abstand zwischen Führungsbahn 17 und Läufer 15. Misst das Detektionsmittel 41 über einen längeren Zeitraum einen Abstand zwischen Führungsbahn 17 und Läufer 15, der unter einem bestimmten Schwellenwert liegt, der als Toleranz für einen fehlerfreien und ordnungsgemäßen Betrieb des Linearmotorsystems 11 hinsichtlich des Abstandes zwischen Führungsbahn 17 und Läufer 15 verstanden werden kann, so kann davon ausgegangen werden, dass ein Abfliegen eines Läufers 15 von der Führungsbahn 17 unwahrscheinlich ist und das Sicherungsmittel 33 kann aus der Kopplung mit den Läufern 15 gelöst werden. Das Detektionsmittel 41 kann an der Führungsbahn 17 oder am Läufer 15 angeordnet sein. Ferner kann das Detektionsmittel 41 ein Detektionselement (z.B. einen Hallsensor) umfassen, das an der Führungsbahn 17 angeordnet ist, und ein weiteres Detektionselement (z.B. einen Encodermagneten) umfassen, das am Läufer 17 angeordnet ist.

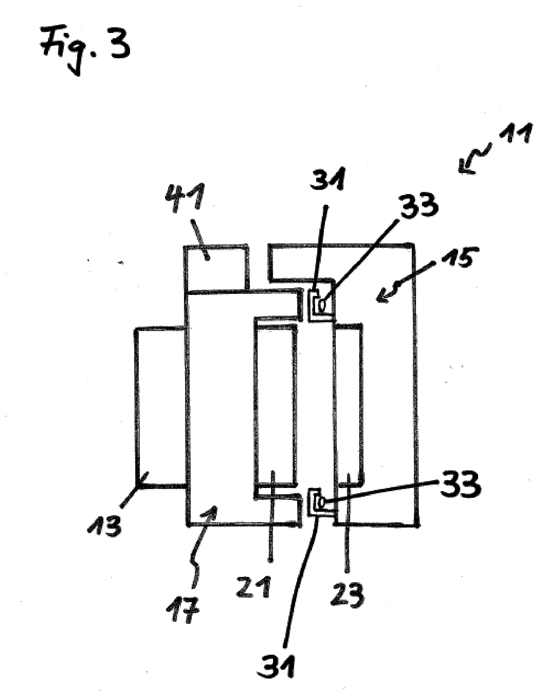

In Fig. 3 ist ein Segment des Linearmotorsystems 11 mit einem Läufer 15 in einer zweiten Ausführungsform in einer Schnittansicht dargestellt. Die zweite Ausführungsform ist identisch zur ersten Ausführungsform, außer dass das Linearmotorsystem 11 zwei Sicherungsmittel 33 aufweist, welche auf unterschiedlicher Höhe entlang der Führungsbahn 17 parallel zueinander verlaufen und durch entsprechende Kopplungselemente 31 mit den Läufern 15 gekoppelt sind. Linearmotorsysteme 11 mit mehr als zwei Sicherungsmittel 31 sind ebenfalls möglich. Mehrere Sicherungsmittel 33 können ebenfalls durch ein einteiliges Kopplungselement mit dem Läufer 15 gekoppelt werden.

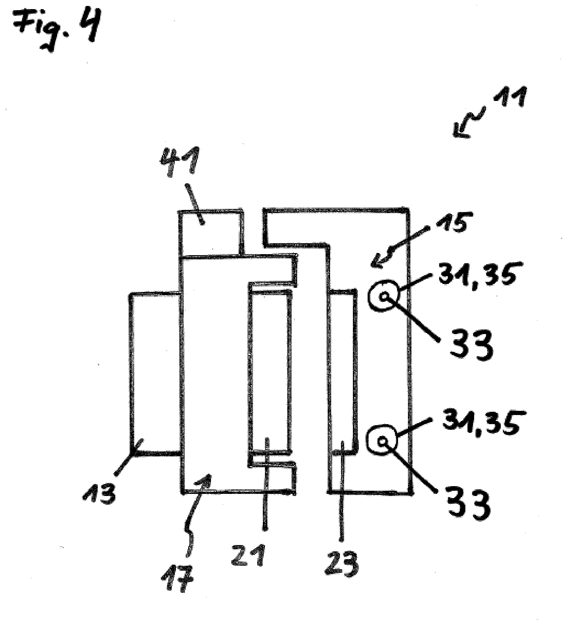

In Fig. 4 ist ein Segment des Linearmotorsystems 11 mit einem Läufer 15 in einer dritten Ausführungsform in einer Schnittansicht dargestellt. Die dritte Ausführungsform ist identisch zur zweiten Ausführungsform, außer dass die Kopplungselemente 31 nicht als Haken zwischen den Läufern 15 und der Führungsbahn 17 sondern als Durchführungen 35 durch die Läufer 15 ausgebildet sind, wobei die Durchführungen 35 als geschlossene Durchführungen innerhalb der Läufer 15 ausgebildet sind. Bei einem erfindungsgemäßen Linearmotorsystem 11 ist die Anzahl an Durchführungen 35 nicht auf zwei beschränkt, so können auch ein oder mehr als zwei als Durchführungen 35 ausgebildete Kopplungselemente 31 ein erfindungsgemäßes Linearmotorsystem 11 realisieren.

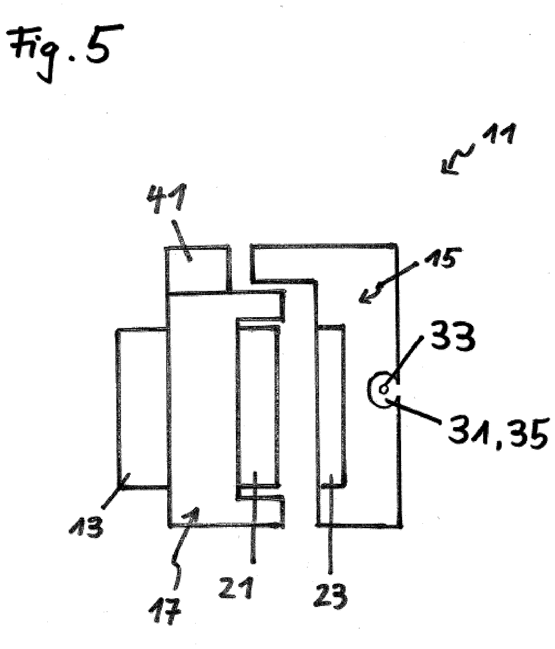

In Fig. 5 ist ein Segment des Linearmotorsystems 11 mit einem Läufer 15 in einer vierten Ausführungsform in einer Schnittansicht dargestellt. Die vierte Ausführungsform ist identisch zur dritten Ausführungsform, außer dass das Kopplungselement 31 anstelle der zwei Durchführungen 35, die als geschlossene Durchführungen innerhalb der Läufer 15 ausgebildet sind, als eine an einer Seite offenen Durchführung 35 durch den Läufer 15 ausgebildet ist. Auch bei der Ausbildung des Kopplungselements als eine an einer Seite offenen Durchführung 35 durch den Läufer 15 ist ein erfindungsgemäßes Linearmotorsystem 11 mit mehr als einem Kopplungselement 31 realisierbar.

### Bezugszeichenliste

- 11: Linearmotorsystem
- 13: Linearmotor
- 15: Läufer
- 17: Führungsbahn
- 21: Elektromagneten
- 23: Antriebsmagnet
- 31: Kopplungselement
- 33: Sicherungsmittel
- 35: Durchführung
- 41: Detektionsmittel

## Patentansprüche

1. Linearmotorsystem (11), insbesondere Transportsystem, beispielsweise Multi-Carrier-System, umfassend:
eine Führungsbahn (17), welche eine Vielzahl von entlang der Führungsbahn (17) verteilt angeordneten Elektromagneten (21) aufweist;
mindestens einen Läufer (15), welcher von der Führungsbahn (17) geführt und entlang dieser bewegbar ist und welcher einen Antriebsmagneten (23) zum Zusammenwirken mit den Elektromagneten (21) zum Bewegen des Läufers (15) aufweist;
mindestens ein Kopplungselement (31); und
mindestens ein Sicherungsmittel (33), welches sich entlang der Führungsbahn (17) erstreckt und durch das Kopplungselement (31) gehalten wird; wobei
das Kopplungselement (31) das Sicherungsmittel (33) mit dem Läufer (15) koppelt.

2. Linearmotorsystem (11) nach Anspruch 1,
wobei das Sicherungsmittel (33) ausgebildet ist, bei einem Lösen des Läufers (15) von der Führungsbahn (17), die Bewegung des Läufers (15) in einer Richtung weg von der Führungsbahn (17) und/oder quer zur Führungsbahn (17) zu bremsen und/oder zu stoppen.

3. Linearmotorsystem (11) nach einem der vorstehenden Ansprüche,
wobei das Sicherungsmittel (33) ein in sich geschlossenes Band oder ein in sich geschlossener Draht ist.

4. Linearmotorsystem (11) nach einem der vorstehenden Ansprüche,
wobei das Linearmotorsystem (11) mehrere Läufer (15) und mehrere Kopplungselemente (31) umfasst und das Sicherungsmittel (33) ausschließlich durch die Kopplungselemente (31) gehalten wird.

5. Linearmotorsystem (11) nach einem der vorstehenden Ansprüche,
wobei das Kopplungselement (31) lösbar mit dem Läufer (15) verbunden ist.

6. Linearmotorsystem (11) nach einem der vorstehenden Ansprüche,
wobei das Kopplungselement (31) zwischen der Führungsbahn (17) und dem Läufer (15) angeordnet ist.

7. Linearmotorsystem (11) nach einem der Ansprüche 1 bis 4,
wobei das Kopplungselement (31) als mindestens eine Durchführung (35) durch den Läufer (15) ausgebildet ist.

8. Linearmotorsystem (11) nach einem der vorstehenden Ansprüche, wobei das Sicherungsmittel (33) lösbar durch das Kopplungselement (31) geführt ist.

9. Linearmotorsystem (11) nach einem der vorstehenden Ansprüche,
wobei der Läufer (15) sich entlang des Sicherungsmittels (33) bewegt.

10. Linearmotorsystem (11) nach einem der vorstehenden Ansprüche,
wobei das Sicherungsmittel (33) von dem Kopplungselement (31) derart gehalten wird, dass sich das Sicherungsmittel (33) entlang der Führungsbahn (17) bewegt.

11. Linearmotorsystem (11) nach einem der vorstehenden Ansprüche, weiterhin ein Detektionsmittel (41) zur Detektion des Abstandes des Läufers (15) von der Führungsbahn (17) umfassend.

12. Verfahren zum Betreiben eines Linearmotorsystems (11), welches eine Führungsbahn (17), die eine Vielzahl von entlang der Führungsbahn (17) verteilt angeordneten Elektromagneten (21) aufweist, mindestens einen Läufer (15), der von der Führungsbahn (17) geführt und entlang dieser bewegbar ist und der einen Antriebsmagneten (23) zum Zusammenwirken mit den Elektromagneten (21) zum Bewegen des Läufers (15) aufweist, mindestens ein Kopplungselement (31), und mindestens ein Sicherungsmittel (33) aufweist, wobei das Kopplungselement (31) das Sicherungsmittel (33) mit dem Läufer (15) koppelt und das Verfahren folgende Schritte umfasst:
Hindurchführen des Sicherungsmittels (33) durch das Kopplungselement (31); und
Bewegen des Läufers (15) entlang der Führungsbahn (17).

13. Verfahren nach Anspruch 12, wobei das Kopplungselement (31) lösbar mit dem mindestens einen Läufer (15) verbindbar ist und das Verfahren folgenden Schritt umfasst:
Verbinden des Kopplungselements (31) mit dem Läufer (15).

14. Verfahren nach Anspruch 12 oder 13, wobei das Linearmotorsystem (11) weiterhin ein Detektionsmittel (41) zur Detektion des Abstandes des Läufers (15) von der Führungsbahn (17) umfasst und das Verfahren folgenden Schritt umfasst:
Lösen des Sicherungsmittels (33) von den Läufern (15), wenn das Detektionsmittel (41) zwischen dem Läufer (15) und der Führungsbahn (17) einen Abstand detektiert, welcher, bevorzugt dauerhaft, kleiner als ein Schwellenwert ist.
